# EUROPEAN PATENT SPECIFICATION

(11) **EP 2 569 367 B1**
(45) Date of publication and mention of the grant of the patent: **17.05.2017**
(21) Application number: 11717140.5
(22) Date of filing: 20.04.2011
(51) Int. Cl.: C08L 23/14, C09J 123/14, C09J 123/10

(54) **ADHESION PROMOTER SYSTEM, AND METHOD OF PRODUCING THE SAME**
ADHÄSIONSPROMOTORSYSTEM UND VERFAHREN ZU DESSEN HERSTELLUNG
SYSTÈME D'ACCÉLÉRATEUR D'ADHÉSION ET SON PROCÉDÉ DE FABRICATION

(30) Priority: 10.05.2010 US 333001 P
(43) Date of publication of application: 20.03.2013
(73) Proprietor: Dow Global Technologies LLC, Midland, MI 48674 (US)
(72) Inventor: HOFMANN, Sandra, CH-8840 Einsiedeln (CH); DIEHL, Charles F., Blue Bell, PA 19422 (US); MALOTKY, David L., Midland, MI 48640 (US)
(74) Representative: Boult Wade Tennant
(86) International application number: PCT/US2011/033233
(87) International publication number: WO 2011/142946

(56) References cited:
- WO-A1-2005/100501
- WO-A1-2005/105941
- WO-A1-2011/094005
- WO-A2-2007/146875
- US-A1- 2004 176 541
- US-A1- 2006 084 764
- US-A1- 2010 059 178

## Description

### Field of Invention

The instant invention relates to an adhesion promoter system, and method of producing the same.

### Background of the Invention

Different techniques have been employed to facilitate the paintability of certain low surface energy plastic substrates such as thermoplastic polyolefins ("TPO"). Such techniques have, for example, largely been employed in the automotive industry such as automotive exterior painting applications, e.g. car bumpers, and automotive interior painting applications, e.g. instrument panels. Furthermore, there are a number of additional non-automotive applications, which require good adhesion of a topcoat to polypropylene substrates, for example, packaging applications, geotextile applications, aquaculture, sporting goods, appliances, consumer electronics, furniture, marine, roofing membranes and toys.

Adhesion promoters can also be employed as a sizing agent for glass fibers used in producing glass fiber reinforced polypropylene or TPO or or to provide for adhesion between natural fibers and a PP or TPO substrate to enable reinforcement.

Typically, an adhesion promoter is employed to enhance the adhesion properties between different layers. Such adhesion layers may be applied as a separate layer, a formulated primer layer, or a blend component in a basecoat or primer formulation. The coatings applied can be solvent-based or waterborne; however, in the latter case, typically at least some surface activation treatment is required, for example, flame treatment, plasma treatment, or corona treatment.
For solvent-based systems the key unmet needs is to provide for a low cost material with chlorine-free being regarded as a benefit.

Currently available solvent based options fail to address all of the concerns associated with coating applications of TPO and/or PP substrates. For example, the currently available options fail to address concerns associated with chlorine containing adhesion promoter formulations.

Despite the research efforts in producing improved adhesion promoter formulation, there is still a need for a chlorine free adhesion promoter system with improved properties; and furthermore, there is still a need for a method for making such chlorine free adhesion promoter systems with improved properties at reduced costs. The adhesion promoter systems of the present invention provide chlorine free adhesion promoter systems with improved adhesion properties without interfering with other properties.

### Summary of the Invention

The instant invention is an adhesion promoter system, and method of producing the same. In one embodiment, the instant invention provides an adhesion promoter system comprising the admixture product of: at least 60 percent by weight of a base polymer, based on the total weight of the solid content, wherein said base polymer comprises a propylene/ethylene copolymer composition, wherein said propylene/ethylene copolymer has a crystallinity in the range of from 1 percent by weight to 30 percent by weight, a heat of fusion in the range of from 2 Joules/gram to 50 Joules/gram), and a DSC melting point in the range of 25°C to 110°C; 5 to less than 40 percent by weight of a functionalized polymer composition, based on the total weight of the solid content, wherein said functionalized polymer composition comprises homopolymers of propylene or copolymers of propylene with hexene, octene and/or other like alpha-olefins, the homopolymers or copolymers having a single unsaturation, a terminal succinic anhydride moiety, and additional succinic anhydride substitutions on the polypropylene backbone, where the succinic anhydride substitution ranges from about 10 to about 45 weight percent of functionalized polymer composition; in the presence of one or more solvents.In an alternative embodiment, the instant invention further provides a method for producing an adhesion promoter system comprising the steps of: selecting at least 60 percent by weight of a base polymer, based on the total weight of the solid content, wherein said base polymer comprises a propylene/ethylene copolymer composition, wherein said propylene/ethylene copolymer nas a crystallinity in the range of from 1 percent by weight to 30 percent by weight, a heat of fusion in the range of from 2 Joules/gram to 50 Joules/gram), and a DSC melting point in the range of 25°C to 110°C; selecting 5 to less than 40 percent by weight of a functionalized polymer composition, based on the total weight of the solid content, wherein said 'unctionalized polymer composition comprises homopolymers of propylene or copolymers Of propylene with hexene, octene and/or other like alpha-olefins, the homopolymers or copolymers having a single unsaturation, a terminal succinic anhydride moiety, and additional succinic anhydride substitutions on the polypropylene backbone, where the succinic anhydride substitution ranges from about 10 to about 45 weight percent of functionalized polymer composition; and admixing said base polymer and said functionalized polymer composition in the presence of one or more solvents; and thereby forming said adhesion promoter system. In another alternative embodiment, the instant invention further provides an adhesion layer comprising a film derived from the adhesion promoter system according with any of the preceding embodiments.

In another alternative embodiment, the instant invention further provides a multilayer structure comprising: (a) at least one or more substrate layers; (b) at least one or more adhesion layers, wherein said one or more adhesion layers comprise a film derived from the adhesion promoter system according with any of the preceding embodiments; (c) at least one or more outer layers; wherein said adhesion layer is disposed therebetween said one or more substrate layers and said one or more outer layers.

In another alternative embodiment, the instant invention further provides a process for making a multilayer structure comprising the steps: (1) selecting a at least one or more substrate layers; (2) selecting the adhesion promoter system according with any of the preceding embodiments; (3) applying said adhesion promoter system to at least one surface of said substrate layer; (4) removing at least a portion of the solvent; (5) thereby forming an adhesion layer associated with said substrate layer; (6) forming at least one or more outer layers on said adhesion layer; and (7) thereby forming a multilayer structure.

In an alternative embodiment, the instant invention provides a composition, method of producing the same, articles made therefrom, and method of making such articles, in accordance with any of the preceding embodiments, except that the adhesion promoter system further comprises one or more fillers, one or more binders, one or more pigments, one or more film forming aids, one or more crosslinking agents, one or more conductivity enhancer agents, one or more rheology modifying agents,

In another alternative embodiment, the instant invention further provides a coating formulation comprising at least the adhesion promoter system, as described hereinabove.

In another alternative embodiment, the instant invention further provides a coating layer comprising a film derived from the coating formulation, as described hereinabove.

In another alternative embodiment, the instant invention further provides a multilayer structure comprising: (a) at least one or more substrate layers; (b) at least one or more coating layers comprising a film derived from the coating formulation, as described hereinabove; and (c) optionally one or more outer layers.

In an alternative embodiment, the instant invention provides a composition, method of producing the same, articles made therefrom, and method of making such articles, in accordance with any of the preceding embodiments, except that the functionalized polymer composition is obtained by a process comprising (a) reacting a propylene/hexene copolymer having a terminal unsaturation with maleic anhydride in a mole ratio of 1:1 to produce terminally succinic anhydride functionalized propylene/hexene copolymer having a terminal succinic anhydride moiety and a single unsaturation, and then (b) reacting the terminally succinic anhydride functionalized propylene/hexene copolymer having a terminal succinic anhydride moiety and a single unsaturation with additional maleic anhydride in the presence of free radical initiation to produce said functionalized polymer composition, wherein said functionalized polymer composition has a succinic anhydride substitution in the range of from 5 to 45 weight percent, based on the weight of functionalized polymer composition.

In another alternative embodiment, the instant invention further provides a process for making a multilayer structure comprising the steps: (1) selecting a at least one or more substrate layers; (2) selecting a coating formulation, as described hereinabove; (3) applying said coating formulation to at least one surface of said substrate layer; (4) removing at least a portion of the solvent; (5) thereby forming a coating layer associated with said substrate layer; (6) optionally forming one or more outer layers on said coating layer; and (7) thereby forming a multilayer structure.

### Detailed Description of the Invention

The instant invention is an adhesion promoter system, and method of producing the same.

In one embodiment, the instant invention provides an adhesion promoter system comprising the admixing product of: (a) at least 60 percent by weight of a base polymer, based on the total weight of the solid content, wherein said base polymer comprises a propylene/ethylene copolymer composition, wherein said propylene/ethylene copolymer has a crystallinity in the range of from 1 percent by weight to 30 percent by weight, a heat of fusion in the range of from 2 Joules/gram to 50 Joules/gram), and a DSC melting point in the range of 25° C to 110° C; (b) 5 to less than 40 percent by weight of a functionalized polymer composition, based on the total weight of the solid content, wherein said functionalized polymer composition comprises homopolymers of propylene or copolymers of propylene with hexene, octene and/or other like alpha-olefins, the homopolymers or copolymers having a single unsaturation, a terminal succinic anhydride moiety, and additional succinic anhydride substitutions on the polypropylene backbone, where the succinic anhydride substitution ranges from about 10 to about 45 weight percent of functionalized polymer composition; (c) in the presence of one or more solvents.

The adhesion promoter system may comprise at least 20 percent by weight of the admixture, based on the weight of the adhesion promoter system. All individual values and subranges from at least 20 weight percent are included herein and disclosed herein; for example, the adhesion promoter system may comprise at least 30 percent by weight of the admixture, based on the weight of the adhesion promoter system; or in the alternative, the adhesion promoter system may comprise at least 40 percent by weight of the admixture, based on the weight of the adhesion promoter system; or in the alternative, the adhesion promoter system may comprise at least 50 percent by weight of the admixture, based on the weight of the adhesion promoter system; or in the alternative, the adhesion promoter system may comprise at least 55 percent by weight of the admixture, based on the weight of the adhesion promoter system; or in the alternative, the adhesion promoter system may comprise at least 65 percent by weight of the admixture, based on the weight of the adhesion promoter system; or in the alternative, the adhesion promoter system may comprise at least 75 percent by weight of the admixture, based on the weight of the adhesion promoter system.

The adhesion promoter system may further comprise one or more fillers, one or more binders, one or more pigments, one or more film forming aids, one or more crosslinking agents, one or more conductivity enhancer agents, one or more rheology modifying agents,

The adhesion promoter system may be applied to the surface of a substrate as a separate layer or it may be incorporated into a coating system.

The admixture may comprise from at least 60 percent by weight of a base polymer, as described hereinbelow in further details, based on the total weight of the solid content. All individual values and subranges from at least 60 weight percent are included herein and disclosed herein; for example, the weight percent of the base polymer can be from a lower limit of 60, 70, 75, 80, 85, 90, or 95 weight percent to an upper limit of 70, 75, 80, 85, 90, 95 or 100 weight percent. For example, the admixture may comprise from 60 to 95 percent, or 70 to 90 percent, or 75 to 95 percent, or 80 to 99 percent, or 85 to 99 percent, or 90 to 100 percent by weight of the base polymer, based on the total weight of the solid content.

The admixture may comprise from less 40 percent by weight of a functionalized polymer composition, as described hereinbelow in further details, based on the total weight of the solid. All individual values and subranges from less than 40 weight percent are included herein and disclosed herein; for example, the weight percent of the functionalized polymer composition can be from a lower limit of 5, 10, 15, 20, 30, or 35 weight percent to an upper limit of 5, 10, 15, 20, 30, or 40 weight percent. For example, the admixture may comprise from 5 to 35 percent, or 5 to 30 percent, or 5 to 25 percent, or 5 to 15 percent, or 5 to 15 percent, or 5 to 10 percent by weight of the functionalized polymer composition, based on the total weight of the solid content.

The admixture may comprise at least 5 percent by weight of solid content, excluding the weight of any filler, based on the total weight of the admixture. All individual values and subranges of at least 5 weight percent are included herein and disclosed herein; for example, the weight percent can be from a lower limit of 5,10,20, 30, 40, 50, 55, 60, 65, 70, 75, or 80 weight percent to an upper limit of 45, 50, 55, 60, 65, 70, 75, 80 or 85 weight percent. For example, the admixture may comprise at least 10 percent, or at least 20 percent, or at least 30 percent, or at least 40 percent, or at least 45 percent, or at least 50 percent, or at least 55 percent, or at least 60 percent, or at least 65 percent, or at least 70 percent by weight of solid content, excluding the weight of any filler, based on the total weight of the admixture.

### Base Polymer

The base polymer comprises a polyolefin composition; for example, a propylene/alpha-olefin copolymer composition such as a propylene/ethylene copolymer composition. The propylene/alpha-olefin copolymer composition may optionally further comprise one or more polymers, e.g. a random copolymer polypropylene (RCP). In one particular embodiment, the propylene/alpha-olefin copolymer is characterized as having substantially isotactic propylene sequences. "Substantially isotactic propylene sequences" means that the sequences have an isotactic triad (mm) measured by ¹³C NMR of greater than about 0.85; in the alternative, greater than about 0.90; in another alternative, greater than about 0.92; and in another alternative, greater than about 0.93. Isotactic triads are well-known in the art and are described in, for example, U.S. Patent No. 5,504,172 and International Publication No. WO 00/01745, which refer to the isotactic sequence in terms of a triad unit in the copolymer molecular chain determined by ¹³C NMR spectra.

The propylene/alpha-olefin copolymer may have a melt flow rate in the range of from 0.1 to 500 g/10 minutes, measured in accordance with ASTM D-1238 (at 230° C / 2.16 Kg). All individual values and subranges from 0.1 to 15 g/10 minutes are included herein and disclosed herein; for example, the melt flow rate can be from a lower limit of 0.1 g/10 minutes, 0.2 g/10 minutes, or 0.5 g/10 minutes to an upper limit of 500 g/10 minutes, 200 g/10 minutes, 100g/10 minutes, or 25 g/10 minutes. For example, the propylene/alpha-olefin copolymer may have a melt flow rate in the range of 0.1 to 200 g/10 minutes; or in the alternative, the propylene/ alpha-olefin copolymer may have a melt flow rate in the range of 0.2 to 100 g/10 minutes; or in the alternative, the propylene/ alpha-olefin copolymer may have a melt flow rate in the range of 0.2 to 50 g/10 minutes; or in the alternative, the propylene/ alpha-olefin copolymer may have a melt flow rate in the range of 0.5 to 50 g/10 minutes; or in the alternative, the propylene/ alpha-olefin copolymer may have a melt flow rate in the range of 1 to 50 g/10 minutes; or in the alternative, the propylene/ alpha-olefin copolymer may have a melt flow rate in the range of 1 to 40 g/10 minutes; or in the alternative, the propylene/ alpha-olefin copolymer may have a melt flow rate in the range of 1 to 30 g/10 minutes.

The propylene/alpha-olefin copolymer has a crystallinity in the range of from at least 1 percent by weight (a heat of fusion of at least 2 Joules/gram) to 30 percent by weight (a heat of fusion of less than 50 Joules/gram). All individual values and subranges from 1 percent by weight (a heat of fusion of at least 2 Joules/gram) to 30 percent by weight (a heat of fusion of less than 50 Joules/gram) are included herein and disclosed herein; for example, the crystallinity can be from a lower limit of 1 percent by weight (a heat of fusion of at least 2 Joules/gram), 2.5 percent (a heat of fusion of at least 4 Joules/gram), or 3 percent (a heat of fusion of at least 5 Joules/gram) to an upper limit of 30 percent by weight (a heat of fusion of less than 50 Joules/gram), 24 percent by weight (a heat of fusion of less than 40 Joules/gram), 15 percent by weight (a heat of fusion of less than 24.8 Joules/gram) or 7 percent by weight (a heat of fusion of less than 11 Joules/gram). For example, the propylene/alpha-olefin copolymer may have a crystallinity in the range of from at least 1 percent by weight (a heat of fusion of at least 2 Joules/gram) to 24 percent by weight (a heat of fusion of less than 40 Joules/gram); or in the alternative, the propylene/alpha-olefin copolymer may have a crystallinity in the range of from at least 1 percent by weight (a heat of fusion of at least 2 Joules/gram) to 15 percent by weight (a heat of fusion of less than 24.8 Joules/gram); or in the alternative, the propylene/alpha-olefin copolymer may have a crystallinity in the range of from at least 1 percent by weight (a heat of fusion of at least 2 Joules/gram) to 7 percent by weight (a heat of fusion of less than 11 Joules/gram); or in the alternative, the propylene/alpha-olefin copolymer may have a crystallinity in the range of from at least 1 percent by weight (a heat of fusion of at least 2 Joules/gram) to 5 percent by weight (a heat of fusion of less than 8.3 Joules/gram). The crystallinity is measured via DSC method, as described above. The propylene/alpha-olefin copolymer comprises units derived from propylene and polymeric units derived from one or more alpha-olefin comonomers. Exemplary comonomers utilized to manufacture the propylene/alpha-olefin copolymer are C₂, and C₄ to C₁₀ alpha-olefins; for example, C₂, C₄, C₆ and C₈ alpha-olefins.

The propylene/alpha-olefin copolymer comprises from 1 to 40 percent by weight of one or more alpha-olefin comonomers. All individual values and subranges from 1 to 40 weight percent are included herein and disclosed herein; for example, the comonomer content can be from a lower limit of 1 weight percent, 3 weight percent, 4 weight percent, 5 weight percent, 7 weight percent, or 9 weight percent to an upper limit of 40 weight percent, 35 weight percent, 30 weight percent, 27 weight percent, 20 weight percent, 15 weight percent, 12 weight percent, or 9 weight percent. For example, the propylene/alpha-olefin copolymer comprises from 1 to 35 percent by weight of one or more alpha-olefin comonomers; or in the alternative, the propylene/alpha-olefin copolymer comprises from 1 to 30 percent by weight of one or more alpha-olefin comonomers; or in the alternative, the propylene/alpha-olefin copolymer comprises from 3 to 27 percent by weight of one or more alpha-olefin comonomers; or in the alternative, the propylene/alpha-olefin copolymer comprises from 3 to 20 percent by weight of one or more alpha-olefin comonomers; or in the alternative, the propylene/alpha-olefin copolymer comprises from 3 to 15 percent by weight of one or more alpha-olefin comonomers.

The propylene/alpha-olefin copolymer has a molecular weight distribution (MWD), defined as weight average molecular weight divided by number average molecular weight (M_{w}/Mₙ) of 3.5 or less; in the alternative 3.0 or less; or in another alternative from 1.8 to 3.0.

Such propylene/alpha-olefin copolymers are further described in details in the U.S. Patent Nos. 6,960,635 and 6,525,157. Such propylene/alpha-olefin copolymers are commercially available from The Dow Chemical Company, under the tradename VERSIFY™, or from ExxonMobil Chemical Company, under the tradename VISTAMAXX™. In one embodiment, the propylene/alpha-olefin copolymers are further characterized as comprising (A) between 60 and less than 100, preferably between 80 and 99 and more preferably between 85 and 99, weight percent units derived from propylene, and (B) between greater than zero and 40, preferably between 1 and 20, more preferably between 4 and 16 and even more preferably between 4 and 15, weight percent units derived from at least one of ethylene and/or a C₄₋₁₀ α-olefin; and containing an average of at least 0.001, preferably an average of at least 0.005 and more preferably an average of at least 0.01, long chain branches/1000 total carbons. The maximum number of long chain branches in the propylene/alpha-olefin copolymer is not critical, but typically it does not exceed 3 long chain branches/1000 total carbons. The term long chain branch, as used herein, refers to a chain length of at least one (1) carbon more than a short chain branch, and short chain branch, as used herein, refers to a chain length of two (2) carbons less than the number of carbons in the comonomer. For example, a propylene/1-octene interpolymer has backbones with long chain branches of at least seven (7) carbons in length, but these backbones also have short chain branches of only six (6) carbons in length. Such propylene/alpha-olefin copolymers are further described in details in the U.S. Provisional Patent Application No. 60/988,999 and International Paten Application No. PCT/US08/082599.

### Functionalized Polymer Composition

The functionalized polymer composition comprises a polypropylene i.e. homopolymers and copolymers of polypropylene and one or more alpha olefins such as ethylene, hexene, and octene, with high amounts of succinic anhydride attached which does not materially affect the physical properties of the polypropylene, and hydrolysis derivatives thereof. When the term "polypropylene" is used herein, it is intended to cover homopolymers and copolymers of polypropylene. For instance, comonomers used include, but are not necessarily limited to, ethylene, hexene, octene.

A key to the method described herein is the use of succinic terminated polypropylene formed via the ene reaction onto vinylidene terminated polypropylene. This polypropylene is often, but not exclusively, prepared by metallocene catalysis. It has been discovered that grafting maleic anhydride onto this polymer does not result in significant chain scission or polymerization. In one non-limiting embodiment the method involves heating maleic anhydride in the presence of a polypropylene that has been formed using a metallocene catalyst in such a way that a single terminal vinylidene group results on each molecule. Most commonly these metallocene polymerizations are done in the presence of hydrogen (which speeds up the polymerization and lowers the molecular weight of the polymer) which results in polymer not having the terminal vinylidene group. These saturated polymers will not work in the inventive method, and thus the polymerization of propylene in the presence of a metallocene catalyst is preferably carried out in the presence of very little or no hydrogen or other transfer agents, such as triethylsilane.

The ene reaction is shown schematically below:

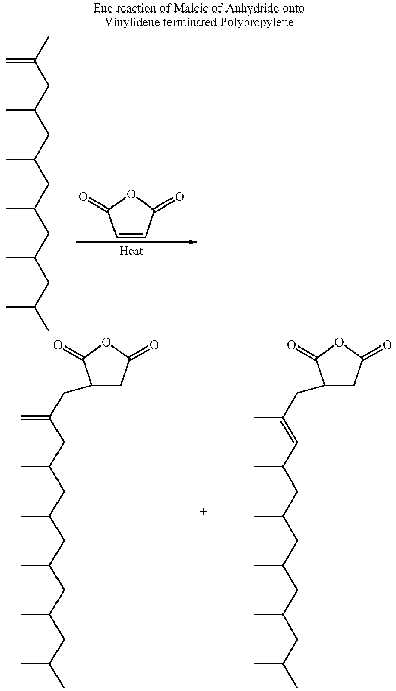

Any form of polypropylene may be used; for example syndiotactic, hemisyndiotactic, isotactic, hemiisotactic, and atactic polypropylene. The polypropylene may be made by a wide variety of transition metal catalysts.

Additionl grafting of more maleic anhydride onto the above grafted polymers does not essentially affect the double bonds. All of the maleic anhydride is added to the backbone of the polypropylene. This is shown schematically below:

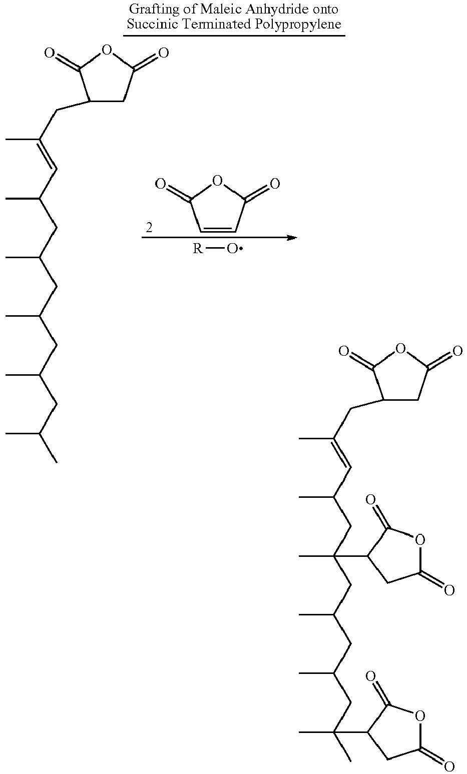

While levels of maleic anhydride incorporation below 5 weight percent are certainly possible, the described method herein facilitates the achieving of higher levels of total maleic anhydride incorporation, on the order of about 5 to about 45 weight percent, alternatively from about 10 to about 45 weight percent.

In one non-limiting embodiment of process, in the ene reaction, one molar equivalent of polypropylene (having a terminal unsaturation) is reacted with about one molar equivalent of maleic anhydride. Heating is applied, but this is generally simply enough necessary to make the polypropylene molten so that the reactants may be mixed.

In another non-restrictive embodiment of the process, in the further addition of maleic anhydride, the polypropylene having a terminal succinic anhydride moiety and a single unsaturation from the ene reaction is combined with additional maleic anhydride in the presence of free radical initiation. The free radical initiation may be any of the commonly used forms of free radical initiation including, but not necessarily limited to, peroxides, photoinitiation through ultraviolet radiation, gamma radiation, metal complexes and combinations thereof. In one non-limiting embodiment of the invention, the peroxide initiator is di-t-butyl peroxide.

When the further addition of maleic anhydride is performed neat, it is necessary to heat the mixture to at least a molten state to permit mixing of the reactants. The reaction temperature will depend on the radical source and polymer melting point and may range from about 60° C to about 200° C. Both steps of the process may be conducted at ambient pressure. Since maleic anhydride is volatile at higher temperatures, the reaction may be conducted in a sealed vessel.

In another non-restrictive embodiment of the process, the polypropylene having a terminal succinic anhydride moiety and a single unsaturation may be dissolved in a solvent and the heating during mixing may be reduced or eliminated. Suitable solvents for the polypropylene reactant include, but are not necessarily limited to, toluene, xylenes, AROMATIC100, N-alkyl Propionates and mixtures thereof.

The molecular weight (Mₙ) of the product polypropylene substituted with maleic anhydride may range from about 500 up about 150,000 daltons, alternatively up to about 50,000 daltons, in another non-limiting embodiment up to about 10,000 daltons, and in another non-restrictive embodiment from 600 to about 5000 Daltons.

In one embodiment, the functionalized polymer composition is obtained by a process comprising (a) reacting a propylene/hexene copolymer having a terminal unsaturation with maleic anhydride in a mole ratio of 1:1 to produce terminally succinic anhydride functionalized propylene/hexene copolymer having a terminal succinic anhydride moiety and a single unsaturation, and then (b) reacting the terminally succinic anhydride functionalized propylene/hexene copolymer having a terminal succinic anhydride moiety and a single unsaturation with additional maleic anhydride in the presence of free radical initiation to produce said functionalized polymer composition, wherein said functionalized polymer composition has a succinic anhydride substitution in the range of from 5 to 45 weight percent, based on the weight of functionalized polymer composition.

Such functionalized polymers are further described in US patent application nos. 2006/0084764 and 2005/0203255, and US Patent No. 7,183,359.

### Solvent

The adhesion promoter system further comprises a solvent. The solvent may be any solvent; for example, the solvent may an organic solvent, an inorganic solvent, combinations thereof, and mixture thereof. The adhesion promoter system of the instant invention comprises 35 to 80 percent by volume of one or more solvents, based on the total volume of the adhesion promoter system. In particular embodiments, the solvent content may be in the range of from 35 to 75; or in the alternative, from 35 to 70; or in the alternative from 45 to 60 percent by volume, based on the total volume of the adhesion promoter system. Such solvents include, but are not limited to, toluene, xylene, AROMATIC100, N-propyl propionate, N-butyl propionate, N-pentyl propionate, mixtures thereof, and combinations thereof. Such solvents are commercially available, for example from ExxonMobil under the tradename AROMATIC 100, and from The Dow Chemical Company under the tradename UCAR N-Alkyl Propionates.

### Additional components

The adhesion promoter system according to the present invention may further comprise optionally one or more binder compositions such as thermoplastic acrylates, available under the tradename PARALOID from The Dow Chemical Company, such as B48N or B99 or polyesters, e.g. OH containing polyesters, available under the tradename Desmophen from Bayer or Polyisocyantes, e.g. aromatic, available under the tradename Desmodur from Bayer; optionally one or more additives; optionally one or more fillers and pigments, e.g. titanium dioxide, mica, calcium carbonate, silica, zinc oxide, milled glass, aluminum trihydrate, talc, antimony trioxide, fly ash, and clay; optionally one or more conductive fillers like carbon black; optionally one or more co-solvents, e.g. glycols, glycol ether, 2,2,4-trimethyl-1,3-pentanediol monoisobutyrate, alcohols, mineral spirits, and benzoate esters; optionally one or more surfactants; optionally one or more defoamers; optionally one or more preservatives, e.g. biocides, mildewcides, fungicides, algaecides, and combinations thereof; optionally one or more rheology modifiers, optionally one or more neutralizers e.g. hydroxides, amines, ammonia, and carbonates.

### Additional Colorant Components

Embodiments of the present invention may also employ a colorant as part of the adhesion promoter system. A variety of colors may be used. Examples include colors such as yellow, magenta, and cyan. As a black coloring agent, carbon black, and a coloring agent toned to black using the yellow/magenta/cyan coloring agents shown below may be used. Colorants, as used herein, include dyes, pigments, and predispersions, among others. These colorants may be used singly, in a mixture, or as a solid solution. In various embodiments, pigments may be provided in the form of raw pigments, treated pigments, pre-milled pigments, pigment powders, pigment presscakes, pigment masterbatches, recycled pigment, and solid or liquid pigment predispersions. As used herein, a raw pigment is a pigment particle that has had no wet treatments applied to its surface, such as to deposit various coatings on the surface. Raw pigment and treated pigment are further discussed in PCT Publication No. WO 2005/095277 and U.S. Patent Application Publication No. 20060078485, In contrast, a treated pigment may have undergone wet treatment, such as to provide metal oxide coatings on the particle surfaces. Examples of metal oxide coatings include alumina, silica, and zirconia. Recycled pigment may also be used as the starting pigment particles, where recycled pigment is pigment after wet treatment of insufficient quality to be sold as coated pigment.

Exemplary colorant particles include, but are not limited to, pigments such as yellow coloring agent, compounds typified by a condensed azo compound, an isoindolynone compound, an anthraquinone compound, an azometal complex methine compound, and an allylamide compound as pigments may be used. As a magenta coloring agent, a condensed azo compound, a diketopyrrolopyrrole compound, anthraquinone, a quinacridone compound, a base dye lake compound, a naphthol compound, a benzimidazolone compound, a thioindigo compound, and a perylene compound may be used. As a cyan coloring agent, a copper phthalocyanine compound and its derivative, an anthraquinone compound, a base dye lake compound, may be used.

### Forming the Adhesion Promoter System

The adhesion promoter system according to the present invention can be formed by any number of methods recognized by those having skill in the art. In one embodiment, one or more base polymers, one or more functionalized polymer compositions, as described hereinabove, are dissolved in one or more solvents, as described above, for example, at a temperature in the range of from 25° C to 120° C.

The one or more base polymers and one or more functionalized polymer compositions may be dissolved in one or more solvents simultaneously; or in the alternative, the one or more base polymers and one or more functionalized polymer compositions may be dissolved in one or more solvents sequentially; or in the alternative, the one or more base polymers and one or more functionalized polymer compositions may be dissolved in one or more solvents in series or in parallel and then brought together. In an alternative embodiment, the one or more base polymers and one or more functionalized polymer compositions may be compounded optionally in the presence of peroxide and heat, and then, dissolved in one or more solvents. A process for producing the adhesion promoter system in accordance with the present invention is not particularly limited. The one or more base polymers or the one or more functionalized polymer compositions may be in the form of pellets, powder, or flakes.

In one embodiment, the present invention further provides a method for producing an adhesion promoter system comprising the steps of: (1) selecting at least 60 percent by weight of a base polymer, based on the total weight of the solid content, wherein said base polymer comprises a propylene/ethylene copolymer composition, wherein said propylene/ethylene copolymer has a crystallinity in the range of from 1 percent by weight to 30 percent by weight, a heat of fusion in the range of from 2 Joules/gram to 50 Joules/gram), and a DSC melting point in the range of 25° C to 110° C; (2) selecting less than 40 percent by weight of a functionalized polymer composition, based on the total weight of the solid content, wherein said functionalized polymer composition comprises homopolymers of propylene or copolymers of propylene with hexene, octene and/or other like alpha-olefins, the homopolymers or copolymers having a single unsaturation, a terminal succinic anhydride moiety, and additional succinic anhydride substitutions on the polypropylene backbone, where the succinic anhydride substitution ranges from about 5 to about 45 weight percent of functionalized polymer composition; (3) admixing said base polymer and said functionalized polymer composition in the presence of one or more solvents, for example, at a temperature in the range of from 25° C to 120° C; and (4) thereby forming said adhesion promoter system.

### End-use Applications

The adhesion promoter system of the present invention may be used, for example, in different coating applications, e.g. automotive coating applications, as an adhesion promoter for certain low surface energy plastic substrates such as thermoplastic polyolefins ("TPO").

The adhesion promoter system may be applied to one or more surfaces of a substrate, an article, or a structure via any method. Such methods include, but are not limited to, spraying, dipping, rolling, printing, and any other conventional technique generally known to those skilled in the art. The adhesion promoter system may be applied to one or more surfaces of a substrate, an article, or a structure at a temperature in the range of greater than about 5° C; for example, in the range of 25 ° C to 400 ° C; or in the alternative, it can be used as a sizing agent for substrates such as glass fibers to produce glass fiber reinforced polypropylene or TPO or or to provide for adhesion between natural fibers and a PP or TPO substrate to enable reinforcement. Such substrates include, but are not limited to, thermoplastic polyolefins ("TPO"), and glass fiber reinforced polypropylene substrate or natural fiber reinforced PP or TPO. The inventive adhesion promoter system may be used as adhesion promoting layer for auto interior applications such as instrument panel, auto exterior applications such as bumpers, or other non automotive applications such as in packaging, toys, leisure, aquaculture, geotextiles, sporting goods, appliances, consumer electronics, furniture, marine, roofing membranes and toys.

### Such coated substrates may further be coated with other topcoat systems

The inventive adhesion promoter system is applied to one or more surfaces of a substrate, an article, or a structure, and then a topcoat is applied. The topcoat may be applied after an intermediate baking step, i.e. removing at least a portion of the solvent; or in the alternative, the topcoat may be applied without the intermediate baking step. In the alternative, the inventive adhesion promoter system is applied to one or more surfaces of a substrate, an article, or a structure, and then at least a portion of the solvent is removed before a topcoat is applied. A clear coat may further be applied after the topcoat is at least partially dried. In the alternative, the adhesion promoter system may be admixed with a topcoat, and then, the admixture may be applied to one or more surfaces of a substrate, an article, or a structure.

In one embodiment, the adhesion promoter system forms an adhesion layer, i.e. a film, which is associated with one or more surfaces of a substrate, an article, or a structure. The adhesion layer may have a thickness in the range of 1 to 30 µm; for example 5 to 15 µm.

In another alternative embodiment, a multilayer structure comprises: (a) at least one or more substrate layers; (b) at least one or more adhesion layers, wherein said one or more adhesion layers comprise a film derived from the adhesion promoter system; (c) at least one or more outer layers; wherein said adhesion layer is disposed therebetween said one or more substrate layers and said one or more outer layers.

In another alternative embodiment, the instant invention further provides a coating formulation comprising at least the adhesion promoter system, as described hereinabove.

In another alternative embodiment, the instant invention further provides a coating layer comprising a film derived from the coating formulation, as described hereinabove.

In another alternative embodiment, the instant invention further provides a multilayer structure comprising: (a) at least one or more substrate layers; (b) at least one or more coating layers comprising a film derived from the coating formulation, as described hereinabove; and (c) optionally one or more outer layers.

In another alternative embodiment, the instant invention further provides a process for making a multilayer structure comprising the steps: (1) selecting at least one or more substrate layers; (2) selecting the adhesion promoter system, as described hereinabove; (3) applying said adhesion promoter system to at least one surface of said substrate layer; (4) removing at least a portion of the solvent; (5) thereby forming an adhesion layer associated with said substrate layer; (6) forming at least one or more outer layers on said adhesion layer; and (7) thereby forming a multilayer structure.

In another alternative embodiment, the instant invention further provides a process for making a multilayer structure comprising the steps: (1) selecting at least one or more substrate layers; (2) selecting a coating formulation, as described hereinabove; (3) applying said coating formulation to at least one surface of said substrate layer; (4) removing at least a portion of the solvent; (5) thereby forming a coating layer associated with said substrate layer; (6) optionally forming one or more outer layers on said coating layer; and (7) thereby forming a multilayer structure.

### Examples

The following examples illustrate the present invention but are not intended to limit the scope of the invention.

### Preparation of Solvent Based Adhesion Promoters

### (1) Solution blending

### Comparative Example 1: Solution blending of Comparative Adhesion Promoter

2.5 g of Versify 4301.05, and 22.5 g of the solvent AROMATIC100 (ExxonMobil Company) was added into a beaker equipped with a magnetic stirring bar. The mixture was put onto a magnetic stirrer. The temperature was raised to about 90° C and stirred while maintaining the temperature at 90° C for about 30 minutes until the resin was entirely dissolved. The solution was removed from the heater and left to cool down. 24 hours thereafter, the polymer solution was utilized as adhesion promoters as an example, for an adhesion promoter containing 0 wt% of the Baker Petrolite resin X10075.

### Inventive Example 1a: Solution blending of Adhesion Promoter

2.4375 g of Versify 4301.05, 0.0625 g of Baker Petrolite X10075, and 22.5 g of the solvent AROMATIC100 (ExxonMobil Company) was added into a beaker equipped with a magnetic stirring bar. The mixture was put onto a magnetic stirrer. The temperature was raised to about 90° C and stirred while maintaining at 90° C temperature for about 30 minutes until the resin was entirely dissolved. The solution was removed from the heater and left to cool down. 24 hours thereafter, the polymer solution was utilized as adhesion promoters as an example, for an adhesion promoter containing 2.5 wt% of the Baker Petrolite resin X10075 in the solid resin phase. Example 1b: Solution blending of Adhesion Promoter

2.375 g of Versify 4301.05, 0.125 g of Baker Petrolite X10075, and 22.5 g of the solvent AROMATIC100 (ExxonMobil Company) was added into a beaker equipped with a magnetic stirring bar. The mixture was put onto a magnetic stirrer. The temperature was raised to about 90° C and stirred while maintaining at 90° C temperature for about 30 minutes until the resin was entirely dissolved. The solution was removed from the heater and left to cool down. 24 hours thereafter, the polymer solution was utilized as adhesion promoters as an example, for an adhesion promoter containing 5 wt% of the Baker Petrolite resin X10075 in the solid resin phase. Inventive Example 1c: Solution blending of Adhesion Promoter

2.25 g of Versify 4301.05, 0.25 g of Baker Petrolite X10075, and 22.5 g of the solvent AROMATIC100 (ExxonMobil Company) was added into a beaker equipped with a magnetic stirring bar. The mixture was put onto a magnetic stirrer. The temperature was raised to about 90° C and stirred while maintaining at 90° C temperature for about 30 minutes until the resin was entirely dissolved. The solution was removed from the heater and left to cool down. 24 hours thereafter, the polymer solution was utilized as adhesion promoters as an example, for an adhesion promoter containing 10 wt% of the Baker Petrolite resin X10075 in the solid resin phase.

### (2) Compounding and Subsequent Dissolution

### Example 2: Pre-compounding of Adhesion Promoting Resin and subsequent dissolution

The admixtures were prepared using a Thermo Haake Rheomix 3000, fitted with Banbury Rotors.. The mixing chamber was heated to 170° C, the rotor speed set to 30 rpm. The base polymer, i.e. Versify 4301.05 was fed into the mixing chamber, and melted. Subsequently, functionalized polymer composition, X10075, available from Baker Petrolite, was added, and mixed for additional 15 minutes with closed ram. In certain examples, peroxide Perkadox 14-40, provided by Akzo Nobel was also added 5 minutes after the last resin addition, and then, the mixture was allowed to react for 15 min at 170° C. Subsequently, the Haake mixer chamber with the mixture therein was cooled down to approximately 130° C, the rotor speed was reduced, and the compound was discharged from the mixer. The compositions of the resins are detailed in Table I. The solvent based adhesion promoter was prepared according to the process describe below utilizing the pre-compounded resin composition obtained herein above.

2.5 g of different pre-compounded resin compositions obtained hereinabove, as shown in Table I, and 22.5 g of the solvent AROMATIC100 (ExxonMobil Company) was added into a beaker equipped with a magnetic stirring bar. The mixture was put onto a magnetic stirrer. The temperature was raised to about 90° C and stirred while maintaining at 90° C temperature for about 30 minutes until the resin was entirely dissolved. The solution was removed from the heater and left to cool down. 24 hours thereafter, the polymer solution was utilized as adhesion promoters as an example, for an adhesion promoter containing various wt% (2.5, 5, and 10 w%) of the Baker Petrolite resin X10075 in the solid resin phase. All compositions are listed in Table I.

### Adhesion To Solvent Based Topcoat and a 2 Component Polyurethane Clear Coat System

Inventive Examples 1a-c were further diluted down to 3.33 % solids by adding 50 g of solvent (AROMATIC100). The injection molded TPO panels (DTF0808SC, The Dow Chemical Company) had been thoroughly wiped off with cleanser Multiprep DX103 (PPG). Then, the adhesion promoter was spray applied with a dry film thickness of ∼ 5 um, after the solvent was flashed off, the Adhesion promoter layer was dried for 15 min at 90° C. Subsequently, the solvent based topcoat DBC Deltron 2000, which is available from PPG, was spray applied in 3 layers and the solvent was flashed off. Thereafter, a 2 component polyurethane clear coat, DC 3010 and DCH 3620 hardener, available from PPG was applied in 2 spray layers. Subsequently, a final bake at 60° C for 30 min was applied. After 7 days, the coated panels were tested against the following media by applying a crosshatch prior to testing: initial adhesion according to ASTM 3359 method B; adhesion after immersion in water at 50 deg C for 40 hours, adhesion after fuel soak for 2 h. The results are shown in Table II.

### Adhesion To Solvent Based Topcoat and a 2 Component Polyurethane Clear Coat System

Inventive Examples 2a-g and Comparative 2 were further diluted down to 3.33 % solids by adding 50 g of solvent (AROMATIC100). The injection molded TPO panels (DTF0808SC, The Dow Chemical Company) had been thoroughly wiped off with cleanser Multiprep DX103 (PPG). Then, the adhesion promoter was spray applied with a dry film thickness of ∼ 5 um, after the solvent was flashed off, the Adhesion promoter layer was dried for 15 min at 90° C. Subsequently, the solvent based topcoat DBC Deltron 2000, which is available from PPG, was spray applied in 3 layers and the solvent was flashed off. Thereafter, a 2 component polyurethane clear coat, DC 3010 and DCH 3620 hardener, available from PPG was applied in 2 spray layers. Subsequently, a final bake at 60° C for 30 min was applied. After 7 days, the coated panels were tested against the following media by applying a crosshatch prior to testing: initial adhesion according to ASTM 3359 method B; adhesion after immersion in water at 50 deg C for 40 hours, adhesion after fuel soak for 2 h. The results are shown in Table III.

### Adhesion To Waterborne Topcoat and 2 Component Polyurethane Clear Coat System

Inventive Examples 1a-c and comparative 1 were diluted to 3.33 % solids by adding additional 50 g of solvent AROMATIC100. The TPO panels (DTF0808SC) were thoroughly wiped off with cleanser Multiprep DX103, available from PPG. Then, the adhesion promoter was spray applied with a dry film thickness of ∼ 5 um, after the solvent was flashed off, the adhesion layer was dried for 15 min at 90° C. Subsequently, the waterborne topcoat GM black, from PPG, was spray applied in 3 layers and the solvent was flashed off. Subsequently, a 2 component polyurethane Clear Coat DC 3010 and DCH 3620 hardener, from PPG was had been applied in 2 spray layers. A final bake at 60° C for 30 minutes was applied. After 7 days, the coated panels were tested against various medias by applying a crosshatch prior to testing: initial adhesion according to ASTM 3359 method B; adhesion after immersion in water at 50 deg C for 40 hours, adhesion after fuel soak for 2 h. The results are shown in Table IV.

### Adhesion to Waterborne Topcoat and 2 Compoent polyurethane clear coat system

Inventive Examples 2a-g and comparative 2 were diluted to 3.33 % solids by adding additional 50 g of solvent AROMATIC100. The TPO panels (DTF0808SC) were thoroughly wiped off with cleanser Multiprep DX103, available from PPG. Then, the adhesion promoter was spray applied with a dry film thickness of ∼ 5 um, after the solvent was flashed off, the adhesion layer was dried for 15 min at 90° C. Subsequently, the waterborne topcoat GM black, from PPG, was spray applied in 3 layers and the solvent was flashed off. Subsequently, a 2 component polyurethane Clear Coat DC 3010 and DCH 3620 hardener, from PPG was had been applied in 2 spray layers. A final bake at 60° C for 30 minutes was applied. After 7 days, the coated panels were tested against various medias by applying a crosshatch prior to testing: initial adhesion according to ASTM 3359 method B; adhesion after immersion in water at 50 deg C for 40 hours, adhesion after fuel soak for 2 h. The results are shown in Table V.

### Adhesion to Solvent Based Topcoat and 2 Component polyurethane clear coat system in a wet-on-wet process

Inventive Examples 1a-c and comparative 1 were diluted to 3.33 % solids by adding additional 50 g of solvent AROMATIC100. The TPO panels (DTF0808SC) were thoroughly wiped off with cleanser Multiprep DX103, available from PPG. Then, the adhesion promoter was spray applied with a dry film thickness of ∼ 5 um and only left to flash off. Without interim baking step, solventbased topcoat DBC Deltron 2000 , from PPG, was spray applied in 3 layers and the solvent was flashed off. Subsequently, a 2 component polyurethane Clear Coat DC 3010 and DCH 3620 hardener, from PPG was had been applied in 2 spray layers. A final bake at 60° C for 30 minutes was applied. After 7 days, the coated panels were tested against various media by applying a crosshatch prior to testing: initial adhesion according to ASTM 3359 method B; adhesion after immersion in water at 50 deg C for 40 hours, adhesion after fuel soak for 2 h. The results are shown in Table VI.

### Adhesion to Solvent Based Topcoat and 2 Component polyurethane clear coat svstem in a wet-on-wet process

Inventive Examples 2a-g and comparative 2 were diluted to 3.33 % solids by adding additional 50 g of solvent AROMATIC100. The TPO panels (DTF0808SC) were thoroughly wiped off with cleanser Multiprep DX103, available from PPG. Then, the adhesion promoter was spray applied with a dry film thickness of ∼ 5 um and only left to flash off. Without interim baking step, solventbased topcoat DBC Deltron 2000, from PPG, was spray applied in 3 layers and the solvent was flashed off. Subsequently, a 2 component polyurethane Clear Coat DC 3010 and DCH 3620 hardener, from PPG was had been applied in 2 spray layers. A final bake at 60° C for 30 minutes was applied. After 7 days, the coated panels were tested against various medias by applying a crosshatch prior to testing: initial adhesion according to ASTM 3359 method B; adhesion after immersion in water at 50 deg C for 40 hours, adhesion after fuel soak for 2 h. The results are shown in Table VII.Inventive pre-compounded 2a and 2b (Table I), Inventive example 1a (Table II), Inventive examples 2a and 2b (Table III), Inventive example 1a (Table IV), Inventive examples 2a and 2b (Table V), Inventive example 1a (Table VI) and Inventive examples 2a and 2b (Table VII) are not according to the invention.

**Table I**

| Resin | Versify 4301.05 | | BH X10075 | | Perkadox 14-40 | Procedure |
|---|---|---|---|---|---|---|
| | wt% | feed [g] | wt% | feed [g] | feed [g] | |
| | | | | | | |
| Inventive Pre-compounded 2a | 97.5 | 214.5 | 2.5 | 5.5 | / | feed base polymer (BP) and melt, then add functionalized polymer composition (FPC) and mix for 15 min |
| Inventive Pre-compounded 2b | 97.5 | 214.5 | 2.5 | 5.5 | 1.875 | feed BP and melt, add FPC and mix for 5 min, add Perkadox, and mix for 15 min |
| Inventive Pre-compounded 2c | 95 | 209 | 5 | 11 | / | feed BP and melt, add FPC and mix for 15 min |
| Inventive Pre-compounded 2d | 95 | 209 | 5 | 11 | 1.875 | feed BP and melt, add FPC and mix for 5 min, add Perkadox, and mix for 15 min |
| Inventive Pre-compounded 2e | 90 | 198 | 10 | 22 | / | feed BP and melt, add FPC and mix for 15 min |
| Inventive Pre-compounded 2f | 90 | 198 | 10 | 22 | 1.875 | feed BP and melt, add FPC and mix for 5 min, add Perkadox, and mix for 15 min |
| Inventive Pre-compounded 2g | 90 | 198 | 10 | 22 | 3.75 | feed BP and melt, add FPC and mix for 5 min, add Perkadox, and mix for 15 min |

| | | | | | | |
|---|---|---|---|---|---|---|
| VERSIFY 4301 is a propylene - ethylene copolymer available from The Dow Chemical Company with a melt flow rate of 25 g/10 min at 230C and a melting point of 62C. BHX-10075 is a maleic anhydride grafted Poly(propylene-co-hexene) available from Baker Petrolite with an acid number of 100 mg KOH/g polymer, a Mw of 4000 and a melting point of 80C. Perkadox 14-40 is an organic peroxide 1,4-Bis(2-tert-butylperoxyisopropyl)benzene from Akzo Nobel with an active peroxide content of 40 %. | | | | | | |

**Table II**

| | | | Adhesion | Cross- | | | | | | | |
|---|---|---|---|---|---|---|---|---|---|---|---|
| | | | testing; | cut | fuel test | | | | | Petrol 95 | |
| | | | ASTM B | Method | | | | (Esso) | | | |
| | | | 33 | B | | | | | | | |
| Sample | Resin | Ratio | Initial Adhesion | wet adhesion 40 hrs in water at 50°C | 5' | 10' | 15' | 30' | 60' | 1h30' | 2h |
| Comparative Example 1 | Versify 4301.05 | 100 | 0B | 0B | 0B | 0B | 0B | 0B | 0B | 0B | 0B |
| Inventive Example 1a | Versify 4301 / X10075 | 97.5 / 2.5 | 5B | 5B | 5B | 5B | 5B | 5B | 5B | 5B | 5B |
| Inventive Example 1b | Versify 4301 / X10075 | 95/5 | 5B | 5B | 5B | 5B | 5B | 5B | 5B | 5B | 5B |
| Inventive Example 1c | Versify 4301 / X10075 | 90/10 | 5B | 5B | 5B | 5B | 5B | 5B | 5B | 5B | 5B |

| | | | | | | | | | | | |
|---|---|---|---|---|---|---|---|---|---|---|---|
| *Adhesion rating: 0 - no adhesion, 5 - excellent adhesion* | | | | | | | | | | | |

**Table III**

| Sample | Versify 4301.05 | X10075 | Adhesion testing; ASTM B 33 | | fuel test | | | | | Petrol 95 | |
|---|---|---|---|---|---|---|---|---|---|---|---|
| | | | | | | | | (Esso) | | | |
| | wt% | wt% | Initial Adhesion | wet adhesion 40 hrs in water at 50°C | 5' | 10' | 15' | 30' | 60' | 1h30' | 2h |
| Comparative 2 | 100 | | 0B | 0B | 0B | 0B | 0B | 0B | 0B | 0B | 0B |
| Inventive Example 2a | 97.5 | 2.5 | 5B | 5B | 5B | 5B | 5B | 5B | 5B | 5B | 5B |
| Inventive Example 2b | 97.5 | 2.5 | 5B | 5B | 5B | 5B | 5B | 5B | 5B | 5B | 5B |
| Inventive Example 2c | 95 | 5 | 5B | 5B | 5B | 5B | 5B | 5B | 5B | 5B | 5B |
| Inventive Example 2d | 95 | 5 | 5B | 5B | 5B | 5B | 5B | 5B | 5B | 5B | 5B |
| Inventive Example 2e | 90 | 10 | 5B | 5B | 5B | 5B | 5B | 5B | 5B | 5B | 5B |
| Inventive Example 2f | 90 | 10 | 5B | 5B | 5B | 5B | 5B | 5B | 5B | 5B | 5B |
| Inventive Example 2g | 90 | 10 | 5B | 5B | 5B | 5B | 5B | 5B | 5B | 5B | 5B |

| | | | | | | | | | | | |
|---|---|---|---|---|---|---|---|---|---|---|---|
| *Adhesion rating: 0 - no adhesion, 5 - excellent adhesion* | | | | | | | | | | | |

**Table IV**

| | | | Adhesion testing; | | fuel test | | | | | Petrol 95 | |
|---|---|---|---|---|---|---|---|---|---|---|---|
| | | | ASTM B 33 | | (Esso) | | | | | | |
| Sample | Resin | Ratio | Initial Adhesion | wet adhesion 40 hrs in water at 50°C | 5' | 10' | 15' | 30' | 60' | 1h30' | 2h |
| Comparative Example 1 | Versify 4301.05 | 100 | 0B | 0B | 0B | 0B | 0B | 0B | 0B | 0B | 0B |
| Inventive Example 1a | Versify 4301 / X10075 | 97.5 / 2.5 | 5B | 5B | 5B | 5B | 5B | 5B | 5B | 5B | 5B |
| Inventive Example 1b | Versify 4301 / X10075 | 95 / 5 | 5B | 5B | 5B | 5B | 5B | 5B | 5B | 5B | 5B |
| Inventive Example 1c | Versify 4301 / X10075 | 90 / 10 | 5B | 5B | 5B | 5B | 5B | 5B | 5B | 5B | 5B |

| | | | | | | | | | | | |
|---|---|---|---|---|---|---|---|---|---|---|---|
| *Adhesion rating: 0 - no adhesion, 5 - excellent adhesion* | | | | | | | | | | | |

**Table V**

| Sample | Versify 4301.05 | X10075 | Perkadox 14-40 | Adhesion testing; ASTM B 33 | | fuel test | | | Petrol 95 (Esso) | | | |
|---|---|---|---|---|---|---|---|---|---|---|---|---|
| | wt% | wt% | feed [g] | Initial Adhesion | wet adhesion 40 hrs in water at 50°C | 5' | 10' | 15' | 30' | 60' | 1h30' | 2h |
| Comparative 2 | | | | 0B | 0B | 0B | 0B | 0B | 0B | 0B | 0B | 0B |
| Inventive Example 2a | 97.5 | 2.5 | / | 5B | 5B | 5B | 5B | 5B | 5B | 5B | 5B | 5B |
| Inventive Example 2b | 97.5 | 2.5 | 1.875 | 5B | 5B | 5B | 5B | 5B | 5B | 5B | 5B | 5B |
| Inventive Example 2c | 95 | 5 | / | 5B | 5B | 5B | 5B | 5B | 5B | 5B | 5B | 5B |
| Inventive Example 2d | 95 | 5 | 1.875 | 5B | 5B | 5B | 5B | 5B | 5B | 5B | 5B | 5B |
| Inventive Example 2e | 90 | 10 | / | 5B | 5B | 5B | 5B | 5B | 5B | 5B | 5B | 5B |
| Inventive Example 2f | 90 | 10 | 1.875 | 5B | 5B | 5B | 5B | 5B | 5B | 5B | 5B | 5B |
| Inventive Example 2g | 90 | 10 | 3.75 | 5B | 5B | 5B | 5B | 5B | 5B | 5B | 5B | 5B |

| | | | | | | | | | | | | |
|---|---|---|---|---|---|---|---|---|---|---|---|---|
| *Adhesion rating: 0 - no Adhesion, 5 - excellent adhesion* | | | | | | | | | | | | |

**Table VI**

| | | | Adhesion | Cross- | | | | | | | |
|---|---|---|---|---|---|---|---|---|---|---|---|
| | | | testing; | cut | fuel test | | | | | Petrol 95 | |
| | | | ASTM B | Method | | | | (Esso) | | | |
| | | | 33 | B | | | | | | | |
| Sample | Resin | Ratio | Initial Adhesion | wet adhesion 40 hrs in water at 50°C | 5' | 10' | 15' | 30' | 60' | 1h30' | 2h |
| Comparative Example 1 | Versify 4301.05 | 100 | 0B | 0B | 0B | 0B | 0B | 0B | 0B | 0B | 0B |
| Inventive Example 1a | Versify 4301 / X10075 | 97.5 / 2.5 | 5B | 5B | 5B | 5B | 5B | 5B | 5B | 5B | 5B |
| Inventive Example 1b | Versify 4301 / X10075 | 95 / 5 | 5B | 5B | 5B | 5B | 5B | 5B | 5B | 5B | 5B |
| Inventive Example 1c | Versify 4301 / X10075 | 90 / 10 | 5B | 5B | 5B | 5B | 5B | 5B | 5B | 5B | 5B |

| | | | | | | | | | | | |
|---|---|---|---|---|---|---|---|---|---|---|---|
| *Adhesion rating: 0 - no Adhesion, 5 - excellent adhesion* | | | | | | | | | | | |

**Table VII**

| Sample | Versify 4301.05 | X10075 | Perkadox 14-40 | Adhesion testing; ASTM B 33 | | fuel test | | | | | Petrol 95 | |
|---|---|---|---|---|---|---|---|---|---|---|---|---|
| | | | | | | | | | (Esso) | | | |
| | wt% | wt% | feed [g] | Initial Adhesion | wet adhesion 40 hrs in water at 50°C | 5' | 10' | 15' | 30' | 60' | 1h30' | 2h |
| Comparative 2 | | | | 0B | 0B | 0B | 0B | 0B | 0B | 0B | 0B | 0B |
| Inventive Example 2a | 97.5 | 2.5 | / | 5B | 5B | 5B | 5B | 5B | 5B | 5B | 5B | 5B |
| Inventive Example 2b | 97.5 | 2.5 | 1.875 | 5B | 5B | 5B | 5B | 5B | 5B | 5B | 5B | 5B |
| Inventive Example 2c | 95 | 5 | / | 5B | 5B | 5B | 5B | 5B | 5B | 5B | 5B | 5B |
| Inventive Example 2d | 95 | 5 | 1.875 | 5B | 5B | 5B | 5B | 5B | 5B | 5B | 5B | 5B |
| Inventive Example 2e | 90 | 10 | / | 5B | 5B | 5B | 5B | 5B | 5B | 5B | 5B | 5B |
| Inventive Example 2f | 90 | 10 | 1.875 | 5B | 5B | 5B | 5B | 5B | 5B | 5B | 5B | 5B |
| Inventive Example 2g | 90 | 10 | 3.75 | 5B | 5B | 5B | 5B | 5B | 5B | 5B | 5B | 5B |

| | | | | | | | | | | | | |
|---|---|---|---|---|---|---|---|---|---|---|---|---|
| *Adhesion rating: 0 - no Adhesion, 5 - excellent adhesion* | | | | | | | | | | | | |

## Claims

1. An adhesion promoter system comprising the admixture product of: at least 60 percent by weight of a base polymer, based on the total weight of the solid content, wherein said base polymer comprises a propylene/ethylene copolymer composition, wherein said propylene/ethylene copolymer has a crystallinity (measured with DSC), in the range of from 1 percent by weight to 30 percent by weight, a heat of fusion in the range of from 2 Joules/gram to 50 Joules/gram), and a DSC melting point in the range of 25°C to 110°C;
5 to less than 40 percent by weight of a functionalized polymer composition, based on the total weight of the solid content, wherein said
functionalized polymer composition comprises homopolymers of propylene or copolymers of propylene with hexene, octene and/or other like alpha-olefins, the homopolymers or copolymers having a single unsaturation, a terminal succinic anhydride moiety, and additional succinic anhydride substitutions on the
polypropylene backbone, where the succinic anhydride substitution ranges from about 10 to about 45 weight percent of functionalized polymer composition;
in the presence of one or more solvents.

2. A method for producing an adhesion promoter system comprising the steps of:
selecting at least 60 percent by weight of a base polymer, based on the total weight of the solid content, wherein said base polymer comprises a
propylene/ethylene copolymer composition, wherein said propylene/ethylene copolymer has a crystallinity in the range of from 1 percent by weight to 30 percent by weight, a heat of fusion in the range of from 2 Joules/gram to 50 Joules/gram), and a DSC melting point in the range of 25°C to 110°C;
selecting 5 to less than 40 percent by weight of a functionalized polymer composition, based on the total weight of the solid content, wherein said
functionalized polymer composition comprises homopolymers of propylene or copolymers of propylene with hexene, octene and/or other like alpha-olefins, the homopolymers or copolymers having a single unsaturation, a terminal succinic anhydride moiety, and additional succinic anhydride substitutions on the
polypropylene backbone, where the succinic anhydride substitution ranges from about 10 to about 45 weight percent of functionalized polymer composition; and admixing said base polymer and said functionalized polymer composition in the presence of one or more solvents; and
thereby forming said adhesion promoter system.

3. An adhesion layer comprising a film derived from the adhesion promoter system of Claim 1.

4. A multilayer structure comprising:
at least one or more substrate layers;
at least one or more adhesion layers, wherein said one or more adhesion layers comprise a film derived from the adhesion promoter system of Claim 1;
at least one or more outer layers;
wherein said adhesion layer is disposed therebetween said one or more substrate layers and said one or more outer layers.

5. A process for making a multilayer structure comprising the steps: selecting a at least one or more substrate layers;
selecting the adhesion promoter system of Claim 1 ; applying said adhesion promoter system to at least one surface of said substrate layer;
removing at least a portion of the solvent;
thereby forming an adhesion layer associated with said substrate layer;
forming at least one or more outer layers on said adhesion layer; and thereby forming a multilayer structure.

6. Any one of Claims 1-5, wherein said adhesion promoter system further comprises one or more fillers, one or more binders, one or more pigments.

7. Any one of Claims 1-5, wherein said functionalized polymer composition is obtained by a process comprising (a) reacting a propylene/hexene copolymer having a terminal unsaturation with maleic anhydride in a mole ratio of 1 : 1 to produce terminally succinic anhydride functionalized propylene/hexene copolymer having a terminal succinic anhydride moiety and a single unsaturation, and then (b) reacting the terminally succinic anhydride functionalized
propylene/hexene copolymer having a terminal succinic anhydride moiety and a single unsaturation with additional maleic anhydride in the presence of free radical initiation to produce said functionalized polymer composition, wherein said functionalized polymer composition has a succinic anhydride substitution in the range of from 10 to 45 weight percent, based on the weight of functionalized polymer composition.

8. A coating composition comprising the adhesion promoter system of claim 1-5, wherein said coating composition comprises at lease 1 percent by weight of the adhesion promoter system.

9. A multilayer structure comprising:
at least one or more substrate layers;
at least one or more coating layers, wherein said one or more coating layers comprises a film derived from a formulated composition comprising the adhesion promoter system and optionally other components and additives.

## Patentansprüche

1. Ein Haftvermittlersystem, beinhaltend das Beimischungsprodukt aus Folgendem: zu mindestens 60 Gewichtsprozent, bezogen auf das Gesamtgewicht des Feststoffgehalts, ein Basispolymer, wobei das Basispolymer eine Propylen/Ethylen-Copolymerzusammensetzung beinhaltet, wobei das Propylen/Ethylen-Copolymer eine Kristallinität (mit DSC gemessen) im Bereich von 1 Gewichtsprozent bis 30 Gewichtsprozent, eine Schmelzwärme im Bereich von 2 Joule/Gramm bis 50 Joule/Gramm und einen DSC-Schmelzpunkt im Bereich von 25 °C bis 110 °C aufweist; zu 5 bis weniger als 40 Gewichtsprozent, bezogen auf das Gesamtgewicht des Feststoffgehalts, eine Zusammensetzung funktionalisierter Polymere, wobei die Zusammensetzung funktionalisierter Polymere Folgendes beinhaltet: Homopolymere von Propylen oder Copolymere von Propylen mit Hexen, Octen und/oder anderen wie alpha-Olefinen, wobei die Homopolymere oder Copolymere eine einzelne Ungesättigtheit, einen terminalen Bernsteinsäureanhydridanteil und zusätzliche Bernsteinsäureanhydridsubstitutionen an der Polypropylenhauptkette aufweisen, wobei die Bernsteinsäureanhydridsubstitution im Bereich von etwa 10 bis etwa 45 Gewichtsprozent der Zusammensetzung funktionalisierter Polymere liegt;
in Gegenwart eines oder mehrerer Lösungsmittel.

2. Ein Verfahren zum Herstellen eines Haftvermittlersystems, das die folgenden Schritte beinhaltet:
Auswählen zu mindestens 60 Gewichtsprozent, bezogen auf das Gesamtgewicht des Feststoffgehalts, eines Basispolymers, wobei das Basispolymer eine Propylen/Ethylen-Copolymerzusammensetzung beinhaltet, wobei das Propylen/Ethylen-Copolymer eine Kristallinität im Bereich von 1 Gewichtsprozent bis 30 Gewichtsprozent, eine Schmelzwärme im Bereich von 2 Joule/Gramm bis 50 Joule/Gramm und einen DSC-Schmelzpunkt im Bereich von 25 °C bis 110 °C aufweist;
Auswählen zu 5 bis weniger als 40 Gewichtsprozent, bezogen auf das Gesamtgewicht des Feststoffgehalts, einer Zusammensetzung funktionalisierter Polymere, wobei die Zusammensetzung funktionalisierter Polymere Folgendes beinhaltet: Homopolymere von Propylen oder Copolymere von Propylen mit Hexen, Octen und/oder anderen wie alpha-Olefinen, wobei die Homopolymere oder Copolymere eine einzelne Ungesättigtheit, einen terminalen Bernsteinsäureanhydridanteil und zusätzliche Bernsteinsäureanhydridsubstitutionen an der Polypropylenhauptkette aufweisen, wobei die Bernsteinsäureanhydridsubstitution im Bereich von etwa 10 bis etwa 45 Gewichtsprozent der Zusammensetzung funktionalisierter Polymere liegt; und Beimischen des Basispolymers und der Zusammensetzung funktionalisierter Polymere in Gegenwart eines oder mehrerer Lösungsmittel; und
dadurch Bilden des Haftvermittlersystems.

3. Eine Haftschicht, die einen von dem Haftvermittlersystem gemäß Anspruch 1 abgeleiteten Film beinhaltet.

4. Eine Mehrschichtstruktur, die Folgendes beinhaltet:
mindestens eine oder mehrere Substratschichten;
mindestens eine oder mehrere Haftschichten, wobei die eine oder mehreren Haftschichten Folgendes beinhalten: einen von dem Haftvermittlersystem gemäß Anspruch 1 abgeleiteten Film;
mindestens eine oder mehrere äußere Schichten;
wobei die Haftschicht zwischen der einen oder den mehreren Substratschichten und der einen oder den mehreren äußeren Schichten angeordnet ist.

5. Ein Verfahren zum Fertigen einer Mehrschichtstruktur, das die folgenden Schritte beinhaltet: Auswählen mindestens einer oder mehrerer Substratschichten;
Auswählen des Haftvermittlersystems gemäß Anspruch 1; Anwenden des Haftvermittlersystems auf mindestens eine Oberfläche der Substratschicht; Entfernen mindestens eines Teils des Lösungsmittels;
dadurch Bilden einer mit der Substratschicht verbundenen Haftschicht;
Bilden mindestens einer oder mehrerer äußerer Schichten auf der Haftschicht; und dadurch Bilden einer Mehrschichtstruktur.

6. Einer der Ansprüche 1-5, wobei das Haftvermittlersystem ferner einen oder mehrere Füllstoffe, ein oder mehrere Bindemittel, ein oder mehrere Pigmente beinhaltet.

7. Einer der Ansprüche 1-5, wobei die Zusammensetzung funktionalisierter Polymere durch ein Verfahren erhalten wird, das Folgendes beinhaltet: (a) Reagierenlassen eines Propylen/Hexen-Copolymers mit einer terminalen Ungesättigtheit mit Maleinsäureanhydrid in einem Molverhältnis von 1 : 1 zum Herstellen von terminal mit Bernsteinsäureanhydrid funktionalisiertem Propylen/Hexen-Copolymer mit einem terminalen Bernsteinsäureanhydridanteil und einer einzelnen Ungesättigtheit und anschließend (b) Reagierenlassen des terminal mit Bernsteinsäureanhydrid funktionalisierten Propylen/Hexen-Copolymers mit einem terminalen Bernsteinsäureanhydridanteil und einer einzelnen Ungesättigtheit mit zusätzlichem Maleinsäureanhydrid in Gegenwart von Radikalinitiierung zum Herstellen der Zusammensetzung funktionalisierter Polymere, wobei die Zusammensetzung funktionalisierter Polymere eine Bernsteinsäureanhydridsubstitution im Bereich von 10 bis 45 Gewichtsprozent, bezogen auf das Gewicht der Zusammensetzung funktionalisierter Polymere, aufweist.

8. Eine Beschichtungszusammensetzung, die das Haftvermittlersystem gemäß den Ansprüchen 1-5 beinhaltet, wobei die Beschichtungszusammensetzung zu mindestens 1 Gewichtsprozent das Haftvermittlersystem beinhaltet.

9. Eine Mehrschichtstruktur, die Folgendes beinhaltet:
mindestens eine oder mehrere Substratschichten;
mindestens eine oder mehrere Beschichtungsschichten, wobei die eine oder mehreren Beschichtungsschichten einen von einer formulierten Zusammensetzung, die das Haftvermittlersystem und optional andere Komponenten und Zusatzstoffe beinhaltet, abgeleiteten Film beinhalten.

## Revendications

1. Un système de promoteur d'adhésion comprenant le produit de mélange additionnel :
d'au moins 60 pour cent en poids d'un polymère de base, rapporté au poids total de la teneur en matière solide, ledit polymère de base comprenant une composition de copolymère propylène/éthylène, ledit copolymère propylène/éthylène ayant une cristallinité (mesurée par DSC) comprise dans la gamme allant de 1 pour cent en poids à 30 pour cent en poids, une chaleur de fusion comprise dans la gamme allant de 2 Joules/gramme à 50 Joules/gramme, et un point de fusion DSC compris dans la gamme allant de 25 °C à 110 °C ;
de 5 à moins de 40 pour cent en poids d'une composition de polymère fonctionnalisée, rapporté au poids total de la teneur en matière solide, ladite composition de polymère fonctionnalisée comprenant des homopolymères de propylène ou des copolymères de propylène avec de l'hexène, de l'octène et/ou d'autres éléments tels que des alpha-oléfines, les homopolymères ou copolymères ayant une insaturation unique, un fragment anhydride succinique terminal, et des substitutions d'anhydride succinique supplémentaires sur le squelette de polypropylène, où la substitution d'anhydride succinique est comprise dans la gamme allant d'environ 10 à environ 45 pour cent en poids de la composition de polymère fonctionnalisée ;
en présence d'un ou de plusieurs solvants.

2. Une méthode pour produire un système de promoteur d'adhésion comprenant les étapes consistant :
à sélectionner au moins 60 pour cent en poids d'un polymère de base, rapporté au poids total de la teneur en matière solide, ledit polymère de base comprenant une composition de copolymère propylène/éthylène, ledit copolymère propylène/éthylène ayant une cristallinité comprise dans la gamme allant de 1 pour cent en poids à 30 pour cent en poids, une chaleur de fusion comprise dans la gamme allant de 2 Joules/gramme à 50 Joules/gramme, et un point de fusion DSC compris dans la gamme allant de 25 °C à 110 °C ;
à sélectionner de 5 à moins de 40 pour cent en poids d'une composition de polymère fonctionnalisée, rapporté au poids total de la teneur en matière solide, ladite composition de polymère fonctionnalisée comprenant des homopolymères de propylène ou des copolymères de propylène avec de l'hexène, de l'octène et/ou d'autres éléments tels que des alpha-oléfines, les homopolymères ou copolymères ayant une insaturation unique, un fragment anhydride succinique terminal, et des substitutions d'anhydride succinique supplémentaires sur le squelette de polypropylène, où la substitution d'anhydride succinique est comprise dans la gamme allant d'environ 10 à environ 45 pour cent en poids de la composition de polymère fonctionnalisée ; et à mélanger ensemble ledit polymère de base et ladite composition de polymère fonctionnalisée en présence d'un ou de plusieurs solvants ; et
à former de ce fait ledit système de promoteur d'adhésion.

3. Une couche d'adhésion comprenant un film dérivé du système de promoteur d'adhésion de la revendication 1.

4. Une structure multicouche comprenant :
au moins une ou plusieurs couches de substrat ;
au moins une ou plusieurs couches d'adhésion, lesdites une ou plusieurs couches d'adhésion comprenant un film dérivé du système de promoteur d'adhésion de la revendication 1 ;
au moins une ou plusieurs couches externes ;
dans laquelle ladite couche d'adhésion est disposée entre lesdites une ou plusieurs couches de substrat et lesdites une ou plusieurs couches externes.

5. Un procédé pour réaliser une structure multicouche comprenant les étapes consistant :
à sélectionner au moins une ou plusieurs couches de substrat ;
à sélectionner le système de promoteur d'adhésion de la revendication 1 ; à appliquer ledit système de promoteur d'adhésion sur au moins une surface de ladite couche de substrat ;
à éliminer au moins une partie du solvant ;
à former de ce fait une couche d'adhésion associée à ladite couche de substrat ;
à former au moins une ou plusieurs couches externes sur ladite couche d'adhésion ; et
à former de ce fait une structure multicouche.

6. N'importe laquelle des revendications 1 à 5, ledit système de promoteur d'adhésion comprenant en outre une ou plusieurs charges, un ou plusieurs liants, un ou plusieurs pigments.

7. N'importe laquelle des revendications 1 à 5, ladite composition de polymère fonctionnalisée étant obtenue par un procédé comprenant (a) la mise en réaction d'un copolymère propylène/hexène ayant une insaturation terminale avec de l'anhydride maléique dans un rapport molaire de 1/1 pour produire un copolymère propylène/hexène fonctionnalisé avec de l'anhydride succinique de façon terminale ayant un fragment anhydride succinique terminal et une insaturation unique, puis (b) la mise en réaction du copolymère propylène/hexène fonctionnalisée avec de l'anhydride succinique de façon terminale ayant un fragment anhydride succinique terminal et une insaturation unique avec de l'anhydride maléique supplémentaire en présence d'un amorçage de radical libre pour produire ladite composition de polymère fonctionnalisée, ladite composition de polymère fonctionnalisée ayant une substitution d'anhydride succinique comprise dans la gamme allant de 10 à 45 pour cent en poids, rapporté au poids de la composition de polymère fonctionnalisée.

8. Une composition de revêtement comprenant le système de promoteur d'adhésion de la revendication 1 à la revendication 5, ladite composition de revêtement comprenant au moins 1 pour cent en poids du système de promoteur d'adhésion.

9. Une structure multicouche comprenant :
au moins une ou plusieurs couches de substrat ;
au moins une ou plusieurs couches de revêtement, lesdites une ou plusieurs couches de revêtement comprenant un film dérivé d'une composition formulée comprenant le système de promoteur d'adhésion et facultativement d'autres composants et additifs.
